# FASCICULE DE BREVET EUROPEEN

(11) **EP 1 550 064 B1**
(45) Date de publication et mention de la délivrance du brevet: **29.08.2007**
(21) Numéro de dépôt: 03807752.5
(22) Date de dépôt: 18.07.2003
(51) Int. Cl.: G07B 15/02, G07F 7/02, G07F 17/10, G07F 17/24

(54) **PROCEDE ET INSTALLATION DE GESTION DE STATIONNEMENT PAYANT**
VERFAHREN UND INSTALLATION ZUR BEZAHLUNGS-PARKVERWALTUNG
METHOD AND INSTALLATION FOR PAY PARKING MANAGEMENT

(30) Priorité: 09.10.2002 FR 0212549
(43) Date de publication de la demande: 06.07.2005
(73) Titulaire: PARKEON S.A.S., 75015 Paris (FR)
(72) Inventeur: MANDY, Damien, F-25660 Fontain (FR)
(74) Mandataire: Domenego, Bertrand
(86) Numéro de dépôt international: PCT/EP2003/007868
(87) Numéro de publication internationale: WO 2004/034294

(56) Documents cités:
- EP-A- 1 229 502
- WO-A-00/69157
- WO-A-93/20539
- PATENT ABSTRACTS OF JAPAN vol. 1996, no. 11, 29 novembre 1996 (1996-11-29) & JP 08 193433 A (MITSUBISHI PRECISION CO LTD), 30 juillet 1996 (1996-07-30)

## Description

La présente invention concerne le stationnement payant dans lequel des dispositifs de blocage bloquent les véhicules en infraction, et dans lequel un code de déblocage est délivré à l'usager après paiement de l'amende correspondante pour lui permettre de débloquer le dispositif de blocage concerné.

Elle trouve une application générale dans la gestion du stationnement payant de véhicules, et plus particulièrement dans le domaine des parcs de stationnement par numéro de place.

On connaît déjà des dispositifs de blocage des véhicules, appelés « sabot » (ou « clamp » ou « vehicle immobilizer» ou « tyre lock » en anglo-saxon), et aptes à bloquer les véhicules en infraction.

D'une manière générale, un tel dispositif de blocage est débloqué par l'introduction d'une clé.

Cette clé peut être une clé physique ou logique (un code secret). Dans ce dernier cas, le déverrouillage du système est effectué en composant un code de déblocage.

Ce code peut être fourni à l'usager après paiement du montant correspondant à l'infraction.

En pratique, le code de déblocage est fourni à l'usager par téléphone en réponse à la fourniture d'un numéro de carte bancaire dont le compte est prélevé du montant de l'amende.

Un tel procédé de gestion de stationnement payant n'est pas totalement satisfaisant en terme de sécurité du paiement, notamment en raison du numéro de la carte bancaire fourni par appel vocal à un serveur, et dont la fourniture est susceptible d'être interceptée frauduleusement

La présente invention remédie à cet inconvénient.

Elle porte sur un procédé de gestion de stationnement payant de véhicules tel que défini par la revendication 1.

Le procédé selon l'invention permet ainsi d'automatiser le déblocage des dispositifs de blocage, sans passer par un appel vocal à un serveur, offrant ainsi un paiement sécurisé.

La présente invention a également pour objet une Installation de gestion de stationnement payant de véhicules telle que définie par la revendication 2.

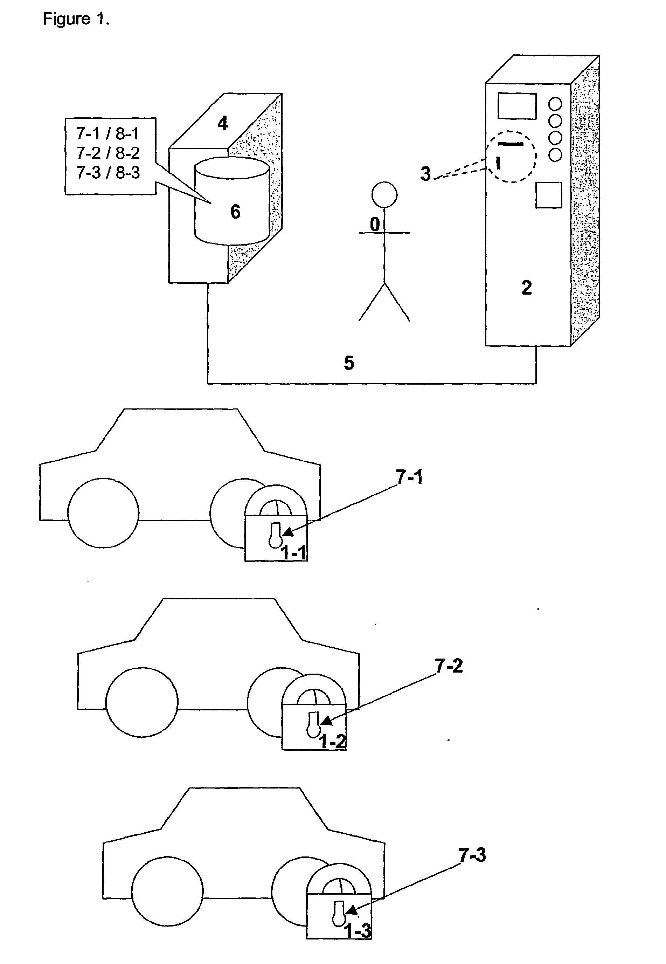

D'autres caracteristiques et avantages de l'invention apparaîtront à la lumière de la description détaillée ci-après et des dessins dans lesquels la figure unique représente schématiquement la gestion du stationnement payant selon l'invention.

En référence à la figure unique, le stationnement payant selon l'invention est mis en oeuvre par exemple dans un parc de stationnement par numéro de place,

Par exemple, trois véhicules en infraction sont bloqués au moyen d'un dispositif de blocage respectif 1-1, 1-2, et 1-3.

D'une manière générale, à chaque dispositif de blocage est attribué un identifiant 7, par exemple 7-1 pour le dispositif 1-1, 7-2 pour le dispositif 1-2 et 7-3 pour le dispositif 1-3.

Par exemple l'identifiant est un numéro figurant sur le dispositif de blocage.

Pour débloquer son véhicule, l'usager 0 se présente à un terminal de stationnement 2 équipé de moyens de paiement 3.

Les moyens de paiement 3 peuvent traiter des titres de paiement appartenant au groupe formé par les pièces, les cartes bancaires, le porte-monnaie électronique ou analogue.

Les moyens de paiement 3 peuvent également mettre en place une session de paiement au cours de laquelle une communication est établie entre un téléphone mobile de l'usager et le terminal, celui-ci étant équipé aussi d'un organe émetteur/récepteur et d'une antenne pour établir ce genre de communication.

Le terminal 2 est équipé d'une interface homme machine qui peut comprendre un clavier et un écran de visualisation.

Le terminal 2 est relié à un serveur 4 par une liaison 5.

Le serveur 4 comprend une base de données 6.

La base de donnée 6 contient au moins une liste de couples formés chacun par un identifiant 7 et un code de déblocage 8.

Par exemple, l'identifiant 7-1 est couplé au code de déblocage 8-1.

En cas de demande de déblocage de la part de l'usager 0, ledit usager compose sur le terminal 2 l'identifiant 7-1 dudit dispositif de blocage 1-1 qui bloque son véhicule.

Au niveau du terminal de stationnement 2, il est prévu d'établir une session de paiement de l'amende correspondante avec les moyens de paiement 3.

Par exemple, le mode de paiement choisi par l'usager 0 est le paiement par carte bancaire.

Après validation du paiement, l'identifiant 7-1 ainsi composé sur le terminal est communiqué au serveur via la liaison 5.

Au niveau du serveur 4, l'identifiant 1-1 est reçu et en réponse le serveur va chercher le code de déblocage dans la base de donnée, ici le code 7-1.

Le code 7-1 ainsi trouvé est retourné au terminal qui le délivre à l'usager pour lui permettre de débloquer son véhicule.

En pratique, plusieurs terminaux peuvent se connecter au serveur, qui joue alors le rôle d'une base de données capable de fournir des données propres à chaque dispositif de blocage.

Le terminal 2 peut être équipé d'un organe apte à délivrer un reçu de paiement faisant preuve de paiement et sur lequel des informations complémentaires peuvent être indiquées.

La composition de l'identifiant 7 sur le terminal peut s'effectuer par clavier, lecture d'un code barre, lecture d'un badge à contact ou sans contact, par une communication courte distance avec un appareil de communication (téléphone mobile) et l'organe émetteur/récepteur compatible équipant le terminal.

Le code de déblocage 8 peut être imprimé sur un reçu.

En variante, le code de déblocage est enregistré sur un support approprié apte à être lu par le dispositif de blocage concerné et appartenant au groupe formé par les cartes ou tickets à ou sans contact.

En variante, en cas de paiement du montant correspondant au déblocage du dispositif de blocage de véhicule par téléphone mobile, le code de déblocage peut être retourné sous forme de message vocal ou visuel (SMS) sur le même téléphone.

En mode de stationnement par numéro de place, l'identifiant du dispositif de blocage peut être lié au numéro de l'emplacement sur lequel le véhicule est positionné. Dans ce cas, l'usager entre le numéro de place sur le terminal correspondant pour réaliser une transaction du montant correspondant au déblocage du dispositif de blocage de véhicule.

Dans ce mode, pour les places gérées par un même terminal, le serveur peut être constitué par ce terminal de gestion des places.

En variante, l'identifiant du dispositif de blocage peut être lié à un numéro tel que le numéro d'immatriculation du véhicule. Dans ce cas, lorsque l'usager abonné au service de stationnement par téléphone mobile appelle le serveur pour réaliser une transaction, le serveur peut lui proposer automatiquement le paiement du déblocage du dispositif déblocage correspondant à son véhicule.

## Revendications

1. Procédé de gestion de stationnement payant de véhicules du type comprenant une pluralité de dispositifs (1-1, 1-2, 1-3) de blocage de véhicules destinés à bloquer les véhicules en infraction, le procédé étant du type comportant les étapes suivantes :
- paiement par l'usager d'une amende correspondant à l'infraction;
- délivrance à l'usager, après paiement de ladite amende, d'un code de déblocage (8),
- déblocage par l'usager du dispositif de blocage correspondant,
**caractérisé en ce qu'**il comprend les étapes suivantes:
- composition par l'usager (0) d'un identifiant (7) correspondant audit dispositif de blocage (1) sur un terminal de stationnement (2) équipé de moyens de paiement (3).
- au niveau dudit terminal de stationnement (2), établissement d'une session de paiement de ladite amende avec les moyens de paiement (3), et communication, après validation de la session de paiement, de l'identifiant (3) à un serveur (4) comprenant une base de donnée (6) reliée au terminal de stationnement (4) et contenant une liste de couples de données formés chacun par un identifiant (7) attribué à un dispositif de blocage et un code de déblocage (8) associé,
- au niveau du serveur (4), réception de l'identifiant (7) ainsi saisi et délivrance en réponse dudit code de déblocage (8) associé à destination du terminal
- au niveau du terminal (2), réception dudit code de déblocage (8) ainsi délivré pour le distribuer à l'usager (O).

2. Installation de gestion de stationnement payant de véhicules du type comprenant une pluralité de dispositifs (1-1, 1-2, 1-3) de blocage de véhicules destinés à bloquer les véhicules en infraction, des moyens de paiement par l'usager d'une amende correspondant à l'infraction et des moyens de délivrance à l'usager, après paiement de ladite amende, d'un code de déblocage (8), de manière à permettre à l'usager de débloquer le dispositif de blocage correspondant,
**caractérisée en ce qu'**elle comprend en outre:
- un terminal de stationnement (2) comprenant des moyens de paiement (3) et des moyens de composition par l'usager (0) d'un identifiant (7) correspondant audit dispositif de blocage (1), et
- un serveur (4) comprenant une base de donnée (6) reliée au terminal de stationnement et contenant une liste de couples de données formés chacun d'un identifiant (7) attribué à un dispositif de blocage (1) et d'un code de déblocage (8) associé,
et **en ce que** le terminal de stationnement (2) est apte à établir une session de paiement de ladite amende avec lesdits moyens de paiement (3), à communiquer au serveur (4), après validation de la session de paiement, l'identifiant composé par l'usager, tandis que le serveur (4) est apte à recevoir l'identifiant (7) ainsi saisi et à délivrer en réponse le code de déblocage (8) associé à destination du terminal pour débloquer le dispositif de blocage concerné.

3. Terminal de stationnement appartenant à l'installation selon la revendication 2, **caractérisé en ce que** lesdits moyens de paiement (3) sont aptes à traiter des titres de paiement appartenant au groupe formé par des pièces, une carte bancaire, un porte-monnaie électronique ou analogue, un téléphone mobile.

4. Terminal selon la revendication 3, **caractérisé en ce que** lesdits moyens de composition de l'identifiant appartiennent au groupe formé par un clavier et/ou écran, un lecteur de code barre, un lecteur d'un titre à ou sans contact, un organe émetteur/récepteur apte à établir une communication avec un téléphone mobile ou analogue.

5. Terminal selon la revendication 3 ou la revendication 4, **caractérisé en ce qu'**il comprend des moyens aptes à délivrer le code de déblocage (8) sur un reçu imprimé ou enregistré sur un titre à ou sans contact susceptible d'être lu par le dispositif de blocage (1) concerné.

## Claims

1. Method of managing chargeable parking of vehicle, of the type using a plurality of vehicle immobilizing devices (1-1, 1-2, 1-3) for immobilizing defaulting vehicles, comprising the following steps :
- the user paying a fine corresponding to the offence,
- supplying to the user, after said fine, has been paid a release code,
- the user releasing the corresponding immobilizing device,
**characterized in that** it comprises the following steps :
- the user entering in a parking terminal (2) equipped with payment means (3) an identifier (7) assigned to said immobilizing device,
- at the parking terminal (2), setting up a session for payment of the amount corresponding to releasing the vehicle immobilizing device by means of the payment means (3), and communication, after validation of the payment session, the identifier (3) entered in this way to a server (4), comprising a database (6) connected to the parking terminal and containing a list of pairs of data items each formed of an identifier (7) assigned to an immobilizing device (1) and an associated release code (8),
- at the server (4), receiving the identifier (7) entered in this way and in response delivering the associated release code (8) to the terminal,
- at the terminal (2), receiving the release code (8) delivered in this way to supply it to the user (0).

2. Installation for managing chargeable parking of vehicles, of the type comprising a plurality of vehicle immobilizing devices (1-1, 1-2, 1-3) for immobilizing defaulting vehicles, means for the user payment of a fine corresponding to the offence and means for supplying to the user, after said fine has been paid, a release code (8), so as to allow the user to release the immobilizing device concerned, **characterized in that** it further comprises :
- a parking terminal (2) comprising payment means (3) and means for the user entering an identifier corresponding to the immobilizing device,
- a server (4) comprising a database (6) connected to the parking terminal and containing a list of pairs of data items each formed of an identifier (7) assigned to an immobilizing device (1) and an associated release code (8),
- and **in that** the parking terminal (2) is adapted to set up a session for payment of the amount corresponding to releasing the vehicle immobilizing device by means of said payment means (3), to communicate to the server (4) the identifier of the immobilizing device to be released after validation of the payment session, while the server (4) is adapted to receive the identifier (7) entered in this way and to deliver in response thereto the associated release code (8) to the terminal, in order to release the immobilizing device concerned,

3. Parking terminal belonging to the installation according to claim 1, **characterized in that** it comprises payment means (3) adapted to process payment means from the group comprising coins, a bank card, an electronic wallet or the like, a mobile telephone.

4. Terminal according to claim 3, **characterized in that** it comprises means for entering an identifier from the group comprising a keypad and/or a screen, a bar code reader, a ticket reader of the contact or contactless type, a transceiver adapted to set up a call to a mobile telephone or the like.

5. Terminal according to claim 3 or claim 4, **characterized in that** it comprises means adapted to deliver the release code (8) on a printed receipt or stored on a ticket of the contact or contactless type that the immobilizing device (1) concerned is able to read.

## Patentansprüche

1. Verfahren zum Verwalten des gebührenpflichtigen Parkens von Fahrzeugen, umfassend eine Vielzahl von Vorrichtungen (1-1, 1-2, 1-3) zum Sperren von Fahrzeugen, die dazu bestimmt sind, die falsch geparkten Fahrzeuge zu sperren, wobei das Verfahren die folgenden Schritte umfasst:
- Einzahlung eines dem Verstoß entsprechenden Bußgeldes durch den Benutzer;
- Abgabe eines Entsperrungscodes (8) an den Benutzer nach Einzahlung dieses Bußgeldes,
- Entsperrung der entsprechenden Sperrvorrichtung durch den Benutzer,
**dadurch gekennzeichnet, dass** es die folgenden Schritte umfasst:
- Eingabe einer der Sperrvorrichtung (1) entsprechenden Kennzahl (7) durch den Benutzer (0) auf einem mit Einzahlungsmitteln (3) ausgerüsteten Parkterminal,
- auf Höhe dieses Parkterminals (2), Erstellung einer Einzahlungssitzung dieses Bußgeldes mit den Einzahlungsmitteln (3) und nach Validierung der Einzahlungssitzung Mitteilung der Kennzahl (3) an einen Server (4), der eine Datenbasis (6) umfasst, die mit dem Parkterminal (4) verbunden ist und eine Liste von Datenpaaren enthält, die jeweils von einem einer Sperrvorrichtung zugeteilten Kennzahl (7) und einem zugeordneten Entsperrungscode (8) gebildet sind,
- auf Höhe des Servers (4), Empfang der auf diese Weise eingegebenen Kennzahl (7) und als Antwort Abgabe dieses zugeordneten Entsperrungscodes (8) an den Terminal,
- auf Höhe des Terminals (2), Empfang des auf diese Weise abgegebenen Entsperrungscodes (8), um ihn an den Benutzer (0) auszugeben.

2. Anlage zur Verwaltung des gebührenpflichtigen Parkens von Fahrzeugen, umfassend eine Vielzahl von Vorrichtungen (1-1, 1-2, 1-3) zum Sperren von Fahrzeugen, die dazu bestimmt sind, die falsch geparkten Fahrzeuge zu sperren, Mittel zum Einzahlen eines dem Verstoß entsprechenden Bußgeldes durch den Benutzer und Mittel zur Abgabe eines Entsperrungscodes (8)an den Benutzer nach Einzahlung des Bußgeldes, so dass dem Benutzer gestattet wird, die entsprechende Sperrvorrichtung zu entsperren,
**dadurch gekennzeichnet, dass** sie außerdem umfasst:
- einen Parkterminal (2), der Einzahlungsmittel (3) und Mittel zum Eingeben einer dieser Sperrvorrichtung (1) entsprechenden Kennzahl (7) durch den Benutzer (0) umfasst, und
- einen Server (4), der eine Datenbasis (6) umfasst, die mit dem Parkterminal verbunden ist und eine Liste von Datenpaaren enthält, die jeweils von einem einer Sperrvorrichtung (1) zugeteilten Kennzahl (7) und von einem zugeordneten Entsperrungscode (8) gebildet sind,
und dass der Parkterminal (2) in der Lage ist, eine Einzahlungssitzung des Bußgeldes mit den Einzahlungsmitteln (3) zu erstellen, dem Server (4) nach Validierung der Einzahlungssitzung die vom Benutzer gewählte Kennzahl mitzuteilen, während der Server (4) in der Lage ist, die auf diese Weise eingegebene Kennzahl (7) zu empfangen und als Antwort den zugeordneten Entsperrungscode (8) zum Terminal abzugeben, um die betreffende Sperrvorrichtung zu entsperren.

3. Parkterminal, der zu der Anlage nach Anspruch 2 gehört, **dadurch gekennzeichnet, dass** die Einzahlungsmittel (3) in der Lage sind, Zahlungsmittel zu behandeln, die zu der Gruppe gehören, die aus Geldstücken, einer Bankkarte, einer elektronischen Geldbörse oder dergleichen, einem Funktelefon besteht.

4. Terminal nach Anspruch 3, **dadurch gekennzeichnet, dass** die Mittel zum Eingeben der Kennzahl zu der Gruppe gehören, die besteht aus einer Tastatur und/oder einem Bildschirm, einem Strichcodeleser, einem Zahlungsmittelleser mit oder ohne Kontakt, einem Sende-/Empfangs-Organ, das eine Verbindung mit einem Funktelefon oder dergleichen herstellen kann.

5. Terminal nach Anspruch 3 oder Anspruch 4, **dadurch gekennzeichnet, dass** es Mittel umfasst, die den Entsperrungscode (8) auf einem Beleg gedruckt oder auf einem Zahlungsmittel mit oder ohne Kontakt, das von der betreffenden Sperrvorrichtung (1) gelesen werden kann, aufgezeichnet abgegeben werden kann.
